# EUROPÄISCHE PATENTSCHRIFT

(11) **EP 2 620 348 B1**
(45) Veröffentlichungstag und Bekanntmachung des Hinweises auf die Patenterteilung: **09.05.2018**
(21) Anmeldenummer: 13000153.0
(22) Anmeldetag: 12.01.2013
(51) Int. Cl.: B62B 3/04, B62B 3/10, F16B 2/10

(54) **Transportlagesicherungsvorrichtung**
Transport position securing device
Dispositif de sécurisation d'une couche de transport

(30) Priorität: 26.01.2012 DE 102012001599
(43) Veröffentlichungstag der Anmeldung: 31.07.2013
(73) Patentinhaber: Görke, Stefan, 37308 Schimberg / Ershausen (DE)
(72) Erfinder: Görke, Stefan, 37308 Schimberg / Ershausen (DE)

(56) Entgegenhaltungen:
- CA-A1- 2 596 892
- DE-A1- 2 648 929
- DE-A1- 3 836 688
- US-A- 5 507 509

## Beschreibung

Die Erfindung betrifft eine Transportlagesicherungsvorrichtung für den rutschsicheren Transport jeglicher Gegenstände, insbesondere jedoch für den Transport von Gütern die auf ebenen Auflageflächen nicht vollflächig aufgesetzt werden können und daher mittels Unterlegbauteilen meist umständlich "lagepositioniert" und für den Transport zusätzlich aufwendig gesichert werden müssen.

Im Stand der Technik sind unterschiedliche Transporteinrichtungen, wie beispielsweise Gabelstapler, oder, wie in der DE 295 03 382 U1 offenbart, Rolltransporter mit kistenartigen Behältern vorbeschrieben.
Vor dem Transport müssen die Güter mit komplizierten Bauteilgeometrien, wie beispielsweise kompliziert geformte Werkstücke mit abbruchgefährdeten Anschlüssen oder sonstigen Anbauteilen, bei all diesen vg. Transporteinrichtungen oftmals sehr material-, kosten- und zeitaufwändig bruchsicher positioniert und dann noch rutschsicher verspannt bzw. befestigt werden.

Im Fertigungsprozess sind derartige zwingend erforderlich "Transportlagesicherungen" sehr material-, zeit- und kostenintensiv, da sich im Fertigungsprozess oftmals nach jedem Montageschritt neue Bauteilgeometrien ergeben die dann wieder neuartige Aufnahme- und Transportbehälter mit neuen Sicherungselementen für den Weitertransport zum nächsten Arbeitsplatz erfordern.

Aufgrund ihres hohen Material- und Zeitaufwandes, insbesondere bei kompliziert geformten Bauteilgeometrien und/oder bei filigranen "Anbauteilen" am Transportgut, beeinträchtigen diese Transportkosten im Fertigungsprozess sehr stark die Herstellungskosten.

Daher kommen beim Transport von kompliziert geformten Bauteilen mit filigranen "Anbauteilen", unter anderem auch Hebezeuge mit selbstentriegelnden Greiferzangen, wie diese beispielsweise in der DE 198 300 PS, der DD 248 103 A1, der DE 42 35 520 A1 oder der EP 1020 395 B1 vorbeschrieben wurden, zum Einsatz.

Derartige selbstentriegelnden Greiferzangen ermöglichen zwar eine schnelle Aufnahme und auch einen sicheren Transport, erfordern jedoch stets neben einem sehr kostenaufwendigen Hebezeug auch noch stets zusätzlich Ablageplätze von denen das/die Werkstück/e "bruchsicher" aufgenommen, und nach dem Transport auch wieder "bruchsicher" abgelegt werden können. Neben dem im Fertigungsprozess mit einer Zwischenlagerung verbundenen Material und Zeitaufwand erfordern diese Zwischenlager zudem oft einen zusätzlichen Lagerhaltungsaufwand.

Zur Vereinfachung der Aufbewahrung und dem Transport ausschließlich von Windmühlenflügeln, ist aus der DE 102 11 357 A1 ein Gestell zur Handhabung des Flügelspitzenendes eines Windmühlenflügels mit einem Flügelwurzelende und einem Flügelspitzenende bekannt, welches aus einem zweiteiligen Gestell, mit einem Untergestell mit Rädern und einem von diesem trennbaren Oberteil mit Heberiemen, Sicherheitsriemen und Klemmplatten zur sehr speziellen und recht aufwendigen Lagesicherung, besteht.

Aus der US 5 507 509 A ist zudem ein Wagen zum Transport von großen Platten bekannt. Dieser Wagen besteht aus einem mit Rädern versehenen Rahmen, in dem ein durch das Eigengewicht der Platten betätigter mit Zugfedern vorgespannten Schwenk-Verspannungsmechanismus angeordnet ist. Wenn eine zu transportierende Platte in den Schwenk-Verspannungsmechanismus gelegt wird, bewirkt das Eigengewicht der Platte, dass diese in eine Transportposition verschoben und dort verklemmt/verspannt wird. Wird jedoch die Platte vom Wagen wieder angehoben, ziehen die Zugfedern den Schwenk-Verspannungsmechanismus in die Ausgangslage und geben dadurch die Platte wieder frei.

In der DE 26 48 929 A1 wird eine an einem Maschinenschraubstock, mit zwei Spannbacken von denen mindestens einer bewegbar ist, angeordnete Klemmvorrichtung vorbeschrieben, welche mehrere gleich lange, zwischen den beiden Spannbacken des Maschinenschraubstockes angeordnete Werkstücke fest aneinander anliegend einspannt. Hierfür sind an einem der Spannbacken des Maschinenschraubstockes zwei zweiarmige Hebel verschwenkbar so angeordnet, dass eine Relativbewegung der Spannbacken eine Verschwenkung der Hebel dergestalt bewirkt, dass eine Belastung des ersten Armes des jeweiligen Hebels, welcher zwischen einem der Spannacken und den Werkstücken angeordnet ist, bewirkt, dass der zweiten Arm des jeweiligen Hebels eine seitliche, senkrecht zur Bewegungsrichtung des/der beweglichen Spannbacken/s, auf die Werkstücke einwirkende seitliche Klemmkraft bewirkt, so dass die beiden Hebel miteinander eine Klemmvorrichtung ausbilden, welche die gleichlangen, zwischen den beiden Spannbacken angeordneten Werkstücke fest aneinander pressen, so dass diese im Maschinenschraubstock von vier Seiten eingespannt sind. Die DE 26 48 929 A1 beschreibt eine Transportlagesicherungsvorrichtung gemäß dem Oberbegriff von Anspruch 1. Der Erfindung liegt die Aufgabe zugrunde eine Transportlagesicherungsvorrichtung für den rutschsicheren Transport jeglicher Gegenstände, insbesondere jedoch für den Transport von Gütern mit kompliziert geformten Bauteilgeometrien und/oder filigranen "Anbauteilen", die auf ebenen Auflageflächen nicht rutsch und bruchsicher flächig aufgesetzt werden können, und die daher mittels spezieller Unterlegbauteile umständlich "positioniert" und für den Transport zusätzlich aufwendig gesichert werden müssen, zu entwickeln, welche die vorgenannten Nachteile des Standes der Technik beseitigt, und die zudem fertigungstechnisch einfach und sehr kostengünstig herstellbar ist, und die in speziellen Bauformen selbst bei sich im Produktionsablauf verändernden Bauteilgeometrie mit minimalen Aufwand auch die Transportlagesicherung des mit "Anbauten" versehenen, d.h. in seinen geometrischen Abmessungen veränderten Bauteiles ermöglicht, dabei jedoch stets schnell, sicher und geräuscharm, und vor allem ohne zusätzliche elektrische, hydraulische oder pneumatische Hilfsenergie kostenoptimiert spannt und entspannt, und bei hoher Funktionssicherheit und Zuverlässigkeit eine kostenminimierte Transportlagesicherung auch unter hohen statischen und dynamischen Belastungen mit minimalen Aufwand und bei minimalem Lagerplatzbedarf gewährleistet.

Erfindungsgemäß wird diese Aufgabe durch eine Transportlagesicherungsvorrichtung nach den Merkmalen des Hauptanspruches der Erfindung gelöst.
Vorteilhafte Ausführungen, Einzelheiten und Merkmale der Erfindung ergeben sich aus den Unteransprüchen sowie der nachfolgenden Beschreibung des erfindungsgemäßen Ausführungsbeispieles in Verbindung mit sechs Zeichnungen zur erfindungsgemäßen Lösung.

Nachfolgend soll nun die Erfindung an Hand eines Ausführungsbeispieles in Verbindung mit sechs Figuren näher erläutert werden.

Es zeigen dabei:
- Figur 1 :: die erfindungsgemäße Transportlagesicherungsvorrichtung in einer Explosivdarstellung in der Seitenansicht in einer auf Rädern verfahrbaren Ausführungsform;
- Figur 2:: die erfindungsgemäße Transportlagesicherungsvorrichtung aus der Figur 1 in einer räumlichen Explosivdarstellung;
- Figur 3:: die erfindungsgemäße Transportlagesicherungsvorrichtung aus der Figur 1 im betriebsbereiten, zusammengebauten Zustand in der Seitenansicht;
- Figur 4:: die in der Figur 3 dargestellte, betriebsbereite, zusammengebaute erfindungsgemäße Transportlagesicherungsvorrichtung in einer räumlichen Darstellung;
- Figur 5:: die erfindungsgemäße Transportlagesicherungsvorrichtung aus den Figuren 1 bis 4 im "Transportzustand", d.h. mit lagesicher gehaltenem und erfindungsgemäß durch das Eigengewicht verspanntem Transportgut, in der Seitenansicht.
- Figur 6 :: die erfindungsgemäße Transportlagesicherungsvorrichtung im "Transportzustand", d.h. mit lagesicher gehaltenem und erfindungsgemäß durch das Eigengewicht verspanntem Transportgut, analog Figur 5 in der räumlichen Darstellung;

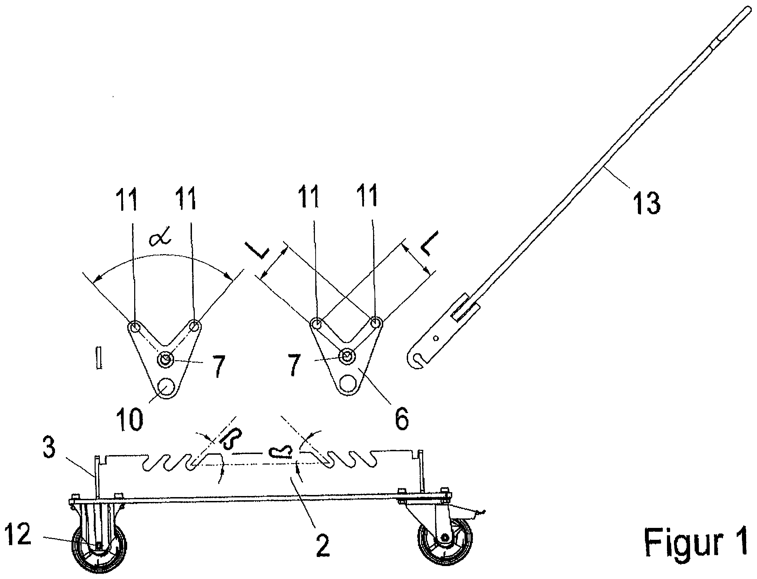

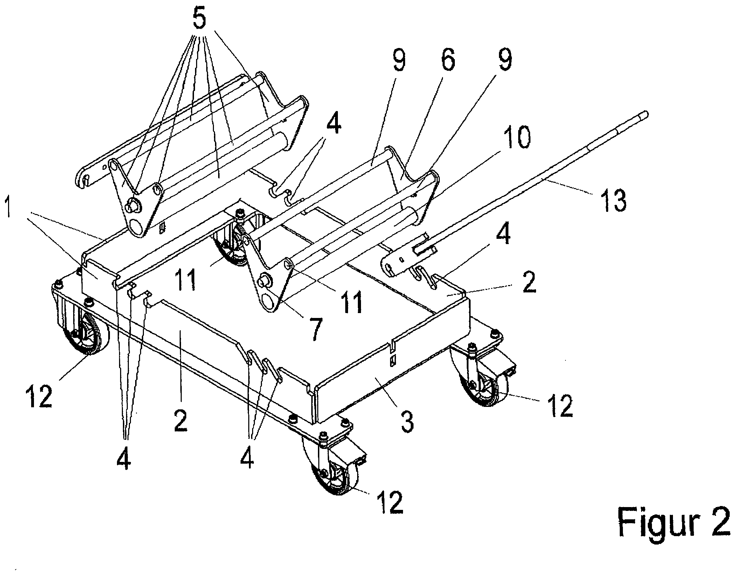

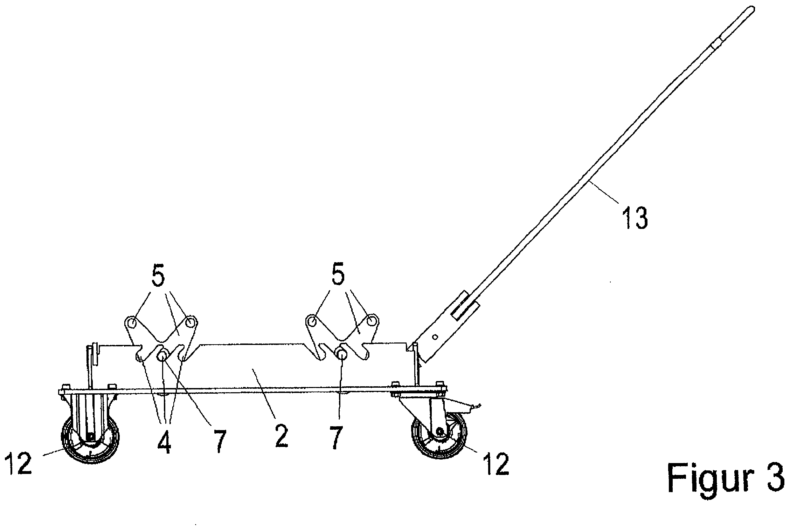

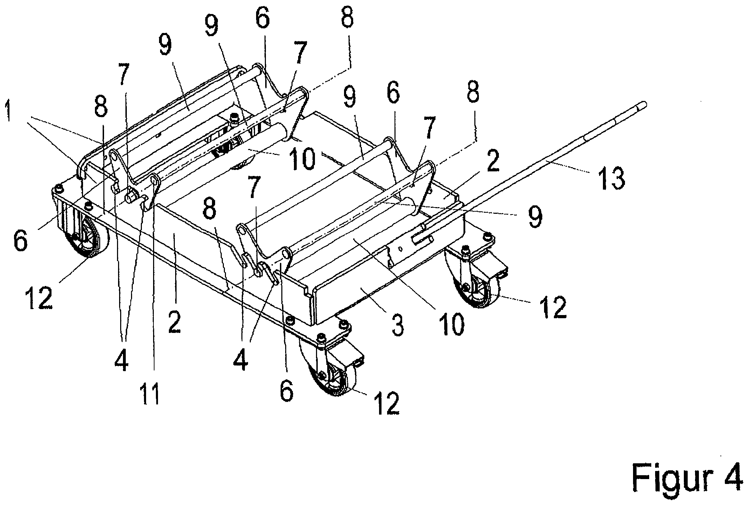

Die Figuren 1 bis 6 zeigen die erfindungsgemäße Transportlagesicherungsvorrichtung für den rutschsicheren Transport jeglicher Gegenstände, insbesondere jedoch für den Transport von Gütern mit kompliziert geformten Bauteilgeometrien und/oder filigranen "Anbauteilen", die auf ebenen Auflageflächen nicht rutsch und bruchsicher flächig aufgesetzt werden können, und die daher mittels spezieller Unterlegbauteile umständlich "positioniert" und für den Transport zusätzlich aufwendig gesichert werden müssen, mit einem Rahmen 1 bestehend aus zwei einander gegenüberliegend angeordneten Seitenwänden 2 und einem oder mehreren, zwischen den Seitenwänden 2 angeordneten Querstegen 3, wobei sich die erfindungsgemäße Transportlagesicherungsvorrichtung insbesondere dadurch auszeichnet, dass in den ineinander gegenüberliegenden Seitenwänden 2 paarweise Rastnuten 4 derart angeordnet sind, und dass im Rahmen 1 in diesen paarweise angeordneten Rastnuten 4 erfindungsgemäß zwei Klemmwippen 5 schwenkbar gelagert sind.

Diese erfindungsgemäßen Klemmwippen 5 bestehen aus zwei zwischen den beiden Seitenwänden 2 im Innern des Rahmens 1 beabstandet angeordneten Trägerplatten 6, wobei an den Trägerplatten 6 die Trägerplatten nach außen, d.h. in Richtung der Seitenwand 2, überragende Achszapfen 7 angeordnet sind, welche erfindungsgemäß drehbar in den Rastnuten 4 gelagert sind. Erfindungswesentlich ist dabei, dass zwischen den Trägerplatten 6 bei nicht durch Transportgüter belastetem Zustand der Klemmwippe 5, von den Achszapfen 7 (um den jeweiligen "Hebelarm") beabstandet, oberhalb des Achszapfens 7, zwei zur Mittenachse 8 der Achszapfen 7 parallel angeordnete Lagesicherungsstege 9, und diesen gegenüberliegend, d.h. unterhalb der Mittenachse 8 der Achszapfen 7 (bei nicht durch Transportgüter belasteten Zustand der Klemmwippe 5), ein oder mehrere Rückstellstäbe 10 derart angeordnet sind, dass der Massenschwerpunkt jeder Klemmwippe 5 stets zwischen den Lagesicherungsstegen 9 und (bei nicht durch Transportgüter belasteten Zustand der Klemmwippe 5) unterhalb der Mittenachse 8 der Achszapfen 7 zu liegen kommt, so dass auch unter Berücksichtigung der Reibung der Achszapfen 7 in den Rastnuten 4, stets eine zuverlässige Rückstellung der Klemmwippen 5 (im "lastfreien Zustand" der Klemmwippen 5) gewährleistet ist. Wesentlich ist in diesem Zusammenhang auch, dass die beiden Lagesicherungsstege 9 in der Ebene der Trägerplatten 6, und so auch deren Befestigungspunkte 11 an den Trägerplatten 6, gegenüber dem Achszapfen 7 einen Öffnungswinkel α einschließen, der in Abhängigkeit vom Winkel der Aufstellkante des Transportgutes, d.h. in Abhängigkeit des Winkels zwischen dem Boden und der Seitenwand des zu transportierenden Gutes, bzw. in Abhängigkeit von der Randausbildung in diesem Bereich meist zwischen 60° und 120° liegt.

Da bei den meisten Transportgütern die Aufstellkante des Transportgutes "randlos" ist, und der Winkel der Aufstellkante des Transportgutes im Bereich von 90°liegt, hat sich In den meisten Anwendungsfällen ein Öffnungswinkel von α = 85° bewährt, welcher auch in den Figuren 1 bis 6 des Ausführungsbeispieles dargestellt ist. Wesentlich ist in diesem Zusammenhang auch, dass die Mittellinien der beiden an einer Klemmwippe 5 parallel zur Mittenachse 8 der Achszapfen 7 angeordneten Lagesicherungsstege 9 unterschiedlich von der Mittenachse 8 entfernt angeordnet sind, d.h. dass die Befestigungspunkte 11 mit dem Achszapfen 7 an der Trägerplatte 6 ein ungleichseitiges / unregelmäßiges Dreieck und damit eine "ungleichseitige" Klemmwippe 5 ausbilden. Möglich ist aber auch, dass wie in den Figuren 1 bis 6 dargestellt die Mittellinien der beiden an einer Klemmwippe 5 parallel zur Mittenachse 8 der Achszapfen 7 angeordneten Lagesicherungsstege 9 gleich weit von der Mittenachse 8 beabstandet sind, d.h. dass die Befestigungspunkte 11 mit dem Achszapfen 7 an der Trägerplatte 6 ein gleichschenkliges Dreieck und damit eine "gleichschenklige" Klemmwippe 5 ausbilden, wobei ein optimaler Abstand der Lagesicherungsstege 9 vom Achszapfen 7, d.h. der Hebelarm L zwischen 80 mm und 85 mm liegt.

Im vorliegenden Ausführungsbeispiel wurde beispielsweise ein Hebelarm L = 82 mm gewählt Wesentlich ist weiterhin, dass die in der Seitenwand 2 angeordnete Rastnut 4 vertikal bzw. gegenüber der Vertikalen in Richtung der, durch die in dieser Rastnut 4 eingehangenen Klemmwippe 5, zu erzielenden Klemmkraft um einen Neigungswinkel β geneigt angeordnet ist, welcher im Bereich von 0° bis 60° liegt.

Im Verlauf der im Rahmen der Entwicklung der hier vorgestellten Lösung durchgeführten Versuchsreihen mit unterschiedlichen Neigungswinkeln β hat sich als optimaler Neigungswinkel der Neigungswinkel β = 45° bewährt.

Die in den Figuren 1 bis 6 dargestellte Bauform der erfindungsgemäßen Transportlagesicherungsvorrichtung dient speziell zum sicheren Transport von Gießformen mit deren diversen Anschlüssen um diese vom Lager zur Maschine zu transportieren, ohne dass diese Schaden nehmen oder umständlich geladen und gesichert werden müssten.

In die Seitenwände 2 des Rahmens 1 werden stets zwei Klemmwippen 5 parallel zueinander eingehängt.

Wesentlich ist in diesem Zusammenhang auch, dass die in jeder Seitenwand 2 nebeneinander mehrere Rastnuten 4 derart angeordnet sind, dass diese beidseitig der Mitte der Seitenwand 2 in entgegengesetzter Richtung um den Neigungswinkel β geneigt angeordnet sind, so dass selbst bei sich im Produktionsablauf verändernden Bauteilgeometrie mit minimalen Aufwand, d.h. einfach durch "Umstecken" einer oder beider Klemmwippen in eines der benachbart angeordneten Klemmnutpaare, auch die Transportlagesicherung des mit "Anbauten" versehenen, d.h. in seinen geometrischen Abmessungen veränderten Bauteiles einfach und zuverlässig gewährleistet ist.

Dabei kann diese in den Figuren 1 bis 6 dargestellte Ausführungsform selbstverständlich auch für den schnellen und sicheren Transport jeglicher quaderförmiger Gegenstände eingesetzt werden.

Durch die Änderung des Abstandes zwischen den Klemmwippen 5, wie auch durch den Austausch einer oder beider "gleichschenkliger" Klemmwippen 5 durch "ungleichschenklige", d.h. "ungleichseitige" Klemmwippen 5, oder auch durch eine/beide Klemmwippen 5 mit einem anderen Öffnungswinkel α können mit minimalem Montage- und Demontageaufwand verschieden große bzw. verschieden geformte Gießformen oder auch andere Gegenstande in den bereits vorhandenen Rahmen 1 eingelegt werden.

Die in den Seitenwänden 2 des Rahmens 1 mit Ihren Achszapfen drehbar gelagerten erfindungsgemäßen Klemmwippen 5 arbeiten nach dem Prinzip des Hebelgesetzes und werden im Ruhezustand durch das Gegengewicht des Rückstellstabes 10 zuverlässig stets in die Ausgangslage, d.h. mit nach oben gerichteten Öffnungswinkel α, ausgerichtet.

Der Hebelarm L zwischen dem an der Trägerplatte 6 angeordneten Achszapfen 7 und dem Befestigungspunkt der Lagesicherungsstege 9 an der Trägerplatte 6 beträgt im vorliegenden Ausführungsbeispiel, wie bereits erwähnt, 82 mm.

Legt man eine Gießform 14 auf die inneren Lagesicherungsstege 9 der Klemmwippen 5, werden diese nach unten gedrückt, beide Klemmwippen 5 drehen sich nach innen, bis die äußeren Lagesicherungsstege 9 der Klemmwippen 5 die Außenkante der Gießform 14 erreichen und diese wie beschrieben auf der Grundlage des Hebelgesetzes einspannen.

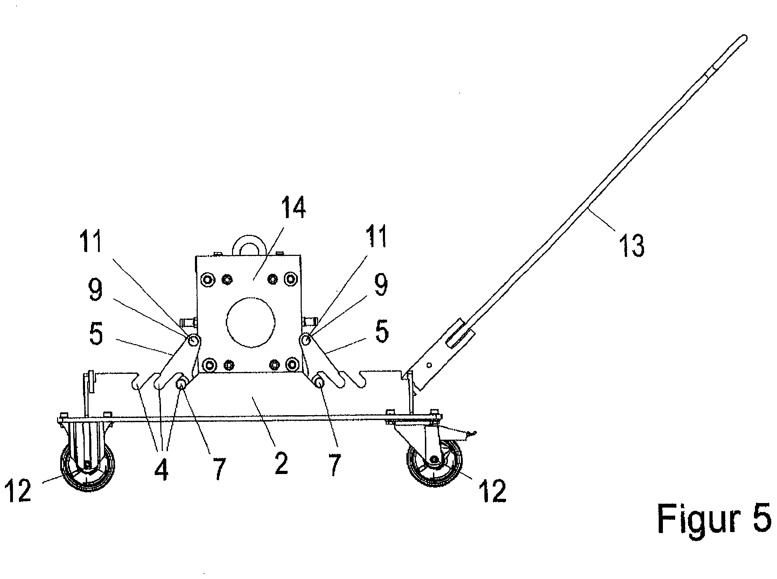

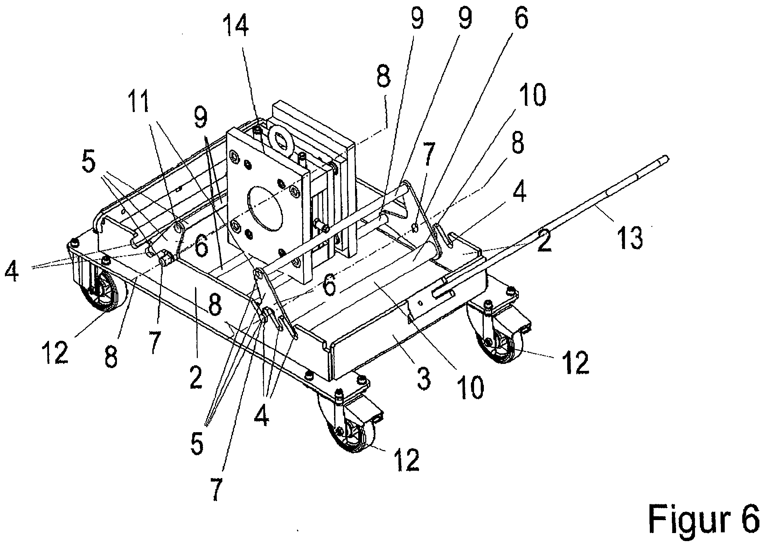

Wobei die Anordnung, wie in den Figuren 5 und 6 mit transportgesicherter Gießform 14 dargestellt, durch die an der Seitenwand von den angepressten Lagesicherungsstegen 9 aufgebrachte Anpresskraft, welche durch das auf den benachbarten Lagesicherungsstege 9 der Klemmwippe 5 einwirkende Eigengewicht der Gießform 14 hervorgerufen wird, in Verbindung mit der die Anpresskraft erzeugenden, und dadurch das Eigengewicht der Gießform 14 tragenden Stütz- und Haltekraft, eine zuverlässige und optimale Lagesicherung der in den Figuren 5 und 6 dargestellten Gießform 14 zwischen den vier Lagesicherungsstegen 9 der beiden Klemmwippen 5 der Anordnung bewirkt.

Die Figuren 5 und 6 zeigen zudem aber auch, dass an allen Seiten der Gießform 14, die Außenabmessungen überragende Baugruppen angeordnet sind, die bei Belastung durch Spann- oder Auflagekräfte abgebrochen oder verbogen werden könnten.

Durch die erfindungsgemäße Vorrichtung wird erstmals ein zuverlässiger und sicherer Transport derartiger schwer in Ihrer Lage zu positionierender Bauteile mit minimalem Aufwand möglich.

Durch den Einsatz spezieller ungleichschenkliger Klemmwippen, oder auch den Einsatz spezieller Klemmwippen mit einem anderen Öffnungswinkel α ist mit der beschriebenen Vorrichtung eine zuverlässige, schnelle und optimale Transportlagesicherung jeglicher Gegenstände möglich.

Bei dem in Verbindung mit den Figuren 1 bis 6 vorgestellten Ausführungsbeispiel werden die Klemmwippen 5 auf das gewünschte "Raster", d.h. in die gewünschten Rastnuten 4 eingelegt, die Gießform 14 abgesetzt und sofort ist sie sicher auf geringster Auflagerfläche gespannt.

Die unter dem Neigungswinkel β schräg angeordneten Rastnuten 4 gewähren dabei einen einwandfreien Sitz der Klemmwippen 5 während der Be- und Entladung wie auch während des Transportes bzw. der Fahrt.

Kennzeichnend ist aber auch, dass der Rahmen 1 auf/an einer Transportvorrichtung, wie z.B. einem Förderband, einem Kettenförderer, einer Rollenbahn o.ä. angeordnet sein, oder dass, wie in den Figuren 1 bis 6 des hier vorgestellten Ausführungsbeispieles dargestellt, der Rahmen 1 auf Rädern 12 angeordnet ist.

Der Rahmen hat im Ausführungsbeispiel die Außenmaße von 714 mm x 482 mm, ist als Schweißkonstruktion ausgeführt und mit einem Fahrwerk mit 4 Rädern 12, und zwar mit zwei Bockrollen und zwei Drehrollen mit Doppelstopp, versehen.

Dadurch kann der Rahmen 1 bei geringstem Lagerplatzbedarf in Werkhallen einfach verfahren und auch sicher abgestellt werden.

Kennzeichnend ist weiterhin, dass am Rahmen 1 neben den Rädern 12 auch eine Zugstange 13 angeordnet ist, die auch abnehmbar, d.h. mit Kupplung ausgeführt sein kann.

Diese in den Figuren 1 bis 6 des Ausführungsbeispieles dargestellte Zugstange mit Kupplung kann durch Einhängen in waagerechter Position und Verdrehen der Zugstange 13 in die Gebrauchsposition gegen unbeabsichtigtes Aushängen gesichert werden und gewährleistet eine uneingeschränkte sichere Manövriermöglichkeit, wobei die auf Rädern 12 angeordnete Transportlagesicherungsvorrichtung mittels der Zugstange 13 sowohl gezogen als auch geschoben werden kann.

Die im Ausführungsbeispiel dargestellte Transportlagesicherungsvorrichtung besteht in aus Stahl, außer der Bereifung, und ist als Schweißkonstruktion hergestellt, kann jedoch auch aus anderen Materialien hergestellt werden.

Mittels der im Ausführungsbeispiel vorgestellten Bauform der erfindungsgemäßen Lösung ist es somit gelungen eine Transportlagesicherungsvorrichtung für den rutschsicheren Transport jeglicher Gegenstände, insbesondere jedoch für den Transport von Gütern mit kompliziert geformten Bauteilgeometrien und/oder filigranen "Anbauteilen", die auf ebenen Auflageflächen nicht rutsch und bruchsicher flächig aufgesetzt werden können, und die daher mittels spezieller Unterlegbauteile umständlich "positioniert" und für den Transport zusätzlich aufwendig gesichert werden müssen, zu entwickeln, welche die vorgenannten Nachteile des Standes der Technik beseitigt, und die zudem fertigungstechnisch einfach und sehr kostengünstig herstellbar ist, und die in speziellen Bauformen selbst bei sich im Produktionsablauf verändernden Bauteilgeometrie mit minimalen Aufwand auch die Transportlagesicherung des mit "Anbauten" versehenen, d.h. in seinen geometrischen Abmessungen veränderten Bauteiles ermöglicht, dabei jedoch stets schnell, sicher und geräuscharm, ohne zusätzliche elektrische, hydraulische oder pneumatische Hilfsenergie spannt und entspannt, und bei hoher Funktionssicherheit und Zuverlässigkeit eine kostenminimierte Transportlagesicherung auch unter hohen statischen und dynamischen Belastungen mit minimalen Aufwand und bei minimalem Lagerplatzbedarf gewährleistet.

### Bezugszeichenzusammenstellung

- 1: Rahmen
- 2: Seitenwand
- 3: Quersteg
- 4: Rastnut
- 5: Klemmwippe
- 6: Trägerplatte
- 7: Achszapfen
- 8: Mittenachse
- 9: Lagesicherungssteg
- 10: Rückstellstab
- 11: Befestigungspunkt
- 12: Rad
- 13: Zugstange
- 14: Gießform

- α: Öffnungswinkel
- β: Neigungswinkel
- L: Hebelarm

## Patentansprüche

1. Transportlagesicherungsvorrichtung für den rutschsicheren Transport von Gegenständen mit kompliziert geformten Bauteilgeometrien und/oder filigranen Anbauteilen mit einem Rahmen (1), bestehend aus zwei einander gegenüberliegend angeordneten Seitenwänden (2) und einem oder mehreren zwischen den Seitenwänden (2) angeordneten Querstegen (3), **dadurch gekennzeichnet,**
- **dass** in den einander gegenüberliegenden Seitenwänden (2) paarweise Rastnuten (4) angeordnet sind, und
- **dass** im Rahmen (1) in diesen paarweise angeordneten Rastnuten (4) zwei Klemmwippen (5) schwenkbar gelagert sind, und
- **dass** jede der beiden Klemmwippen (5) zwei zwischen den beiden Seitenwänden (2) im Innern des Rahmens (1) beabstandet angeordnete Trägerplatten (6) aufweisen, wobei die Trägerplatten (6) nach außen, in Richtung der Seitenwand (2), gerichtete Achszapfen (7) besitzen, welche drehbar in den Rastnuten (4) gelagert sind, und
- **dass** zwischen den Trägerplatten (6) von den Achszapfen (7) beabstandet, im nicht durch Transportgüter belasteten Zustand der Klemmwippe (5) oberhalb des Achszapfens (7), zwei zur Mittenachse (8) der Achszapfen (7) parallel angeordnete Lagesicherungsstege (9), und diesen gegenüberliegend ein oder mehrere Rückstellstäbe (10) angeordnet sind, wobei im nicht durch Transportgüter belasteten Zustand der Massenschwerpunkt jeder Klemmwippe (5) stets zwischen den Lagesicherungsstegen (9) und unterhalb der Mittenachse (8) der Achszapfen (7) zu liegen kommt.

2. Transportlagesicherungsvorrichtung nach Anspruch 1, **dadurch gekennzeichnet,**
- **dass** die beiden Lagesicherungsstege (9) in der Ebene der Trägerplatten (6), und so auch deren Befestigungspunkte (11) an den Trägerplatten (6), gegenüber dem Achszapfen (7) einen Öffnungswinkel (α) einschließen, der in Abhängigkeit von der Gestaltung der Aufstellkante des Transportgutes, wie auch in Abhängigkeit des Winkels zwischen dem Boden und der Seitenwand des zu transportierenden Gutes, im Bereich von 60° bis 120° liegt.

3. Transportlagesicherungsvorrichtung nach Anspruch 2, **dadurch gekennzeichnet,**
- **dass** in einer bevorzugten Bauform für Transportgüter bei denen der Winkel der Aufstellkante des Transportgutes im Bereich von 90° liegt, der Öffnungswinkel (α) = 85° beträgt.

4. Transportlagesicherungsvorrichtung nach einem oder mehreren der Ansprüche 1 bis 3, **dadurch gekennzeichnet,**
- **dass** mindestens eine der beiden Klemmwippen (5) als "ungleichseitige" Klemmwippe (5) so ausgebildet ist, dass die Mittellinien der beiden an einer Klemmwippe (5) parallel zur Mittenachse (8) der Achszapfen (7) angeordneten Lagesicherungsstege (9) unterschiedlich weit von der Mittenachse (8) beabstandet sind, so dass die Befestigungspunkte (11) der Lagesicherungsstege (9) mit dem Achszapfen (7) an der Trägerplatte (6) ein ungleichseitiges / unregelmäßiges Dreieck ausbilden.

5. Transportlagesicherungsvorrichtung nach einem oder mehreren der Ansprüche 1 bis 4, **dadurch gekennzeichnet,**
- **dass** mindestens eine der beiden Klemmwippen (5) als "gleichschenklige" Klemmwippe (5) so ausgebildet ist, dass die Mittellinien der beiden an einer Klemmwippe (5) parallel zur Mittenachse (8) der Achszapfen (7) angeordneten Lagesicherungsstege (9) gleich weit von der .Mittenachse (8) beabstandet sind, so dass die Befestigungspunkte (11) der Lagesicherungsstege (9) mit dem Achszapfen (7) an der Trägerplatte (6) ein gleichschenkliges Dreieck ausbilden.

6. Transportlagesicherungsvorrichtung nach einem oder mehreren der Ansprüche 1 bis 5, **dadurch gekennzeichnet,**
- **dass** die in der Seitenwand (2) angeordnete Rastnut (4) vertikal oder gegenüber der Vertikalen in Richtung der, durch die in dieser Rastnut (4) eingehangenen Klemmwippe (5), zu erzielenden Klemmkraft um einen Neigungswinkel (β) geneigt angeordnet ist, welcher im Bereich von 0° bis 60 liegt.

7. Transportlagesicherungsvorrichtung nach Anspruch 6, **dadurch gekennzeichnet,**
- **dass** in jeder Seitenwand (2) nebeneinander mehrere Rastnuten (4) angeordnet sind, die jedoch beidseitig der "Mitte" der Seitenwand (2) in entgegengesetzter Richtung um den Neigungswinkel (β) geneigt angeordnet sind.

8. Transportlagesicherungsvorrichtung nach einem oder mehreren der Ansprüche 1 bis 7, **dadurch gekennzeichnet,**
- **dass** der Rahmen (1) auf/an einer Transportvorrichtung angeordnet ist.

9. Transportlagesicherungsvorrichtung nach einem oder mehreren der Ansprüche 1 bis 7, **dadurch gekennzeichnet,**
- **dass** der Rahmen (1) auf einem Fahrwerk mit Rädern (12) angeordnet ist.

10. Transportlagesicherungsvorrichtung nach Anspruch 9, **dadurch gekennzeichnet,**
- **dass** am Rahmen (1) eine Zugstange (13) angeordnet ist.

11. Transportlagesicherungsvorrichtung nach Anspruch 10, **dadurch gekennzeichnet,**
- **dass** die Zugstange (13) abnehmbar ausgeführt ist.

12. Transportlagesicherungsvorrichtung nach einem oder mehreren der Ansprüche 2 bis 11, **dadurch gekennzeichnet,**
- **dass** die beiden Klemmwippen (5) gleiche oder voneinander verschiedene Öffnungswinkel (α) aufweisen.

## Claims

1. Transport position securing device for non-slip transportation of articles with complex shaped component geometries and/or delicate add-on components with a frame (1) consisting of two side walls (2) arranged opposite to each other and one or several cross sections (3) arranged between the side walls (2), **characterized by** the fact
- that t-slots (4) are arranged in the side walls (2) opposite to each other, and
- that two clamping rockers (5) are on swivel bearings in these t-slots (4) to be in pairs in the frame (1), and
- that each of the two clamping rockers (5) has two carrier plates (6) arranged at a distance from one another inside the frame (1) between both the side walls (2), whereby the carrier plates (6) have kingpins (7) located to the outside in the direction of the side wall (2) which are mounted on pivots in the t-slots (4), and
- that two position securing bars (9) are arranged between the carrier plates (6) at a distance from the kingpins (7) where the transportation goods do not load the clamping rocker (5), they are above the kingpins (7) to be parallel to the central axis (8) of the kingpins (7) and one or several reset rods (10) is/are located opposite to these, whereby the centre of gravity of each clamping g rocker (5) always rests between the transport position securing bars (9) and is between the central axis (8) of the kingpins (7) when the transportation goods do not exert a load.

2. Transport position securing device according to claim 1, **characterized by** the fact,
- that both the position securing bars (9) form an opening angle (α) on the level of the carrier plate (6) and accordingly their fastening points (11) at the carrier plates (6) opposite to the kingpin (7) which is between 60° to 120° according to the design of the edge surface where the transported goods are placed and also the angle between the base and the side wall of the goods to be transported.

3. Transport position securing device according to claim 2, **characterized by** the fact,
- that the opening angle (α) = 85° with a preferred construction design for goods to be transported where the angle of the placement edge surface of the goods to be transported is in the region of 90°.

4. Transport position securing device according to one or several of claims 1 to 3, **characterized by** the fact,
- that at least one of the two clamping rockers (5) is designed as a clamping rocker (5) with "unequal sides" so that the central lines of the position securing bars (9) arranged at a clamping rocker (5) are parallel to the central axis (8) of the kingpins (7) to be at different distances from the central axis (8) so that the fastening points (11) of the position securing bars (9) form an irregular/scalene triangle with the kingpin (7) at the carrier plate (6).

5. Transport position securing device according to one or several of the claims 1 to 4, **characterized by** the fact that,
- that at least one of the two clamping rockers (5) is designed as a clamping rocker (5) with an "equilateral" form, so that the central lines of the position securing bars (9) arranged parallel to the central axis (8) of the kingpins (7) is just as far from the central axis (8), so that the fastening points (11) of the position securing bars (9) form an equilateral triangle with the kingpin (7) at the carrier plate (6).

6. Transport position securing device according to one or several of the claims 1 to 5, **characterized by** the fact
- that the t-slot (4) arranged vertically or away from the vertical in the side wall (2) in the direction of the clamping rocker (5) hooked into the t-slot (4) is located at a slant by an angle of inclination (β) to reach a clamping force which lies between 0° to 60°

7. Transport position securing device according to claim 6, **characterized by** the fact,
- that several t-slots (4) are arranged next to each other in the side wall (2) which are inclined however on both sides of the "centre" of the side wall (2) in the opposite direction of the angle of inclination (β).

8. Transport position securing device according to one or several of the claims 1 to 7, **characterized by** the fact
- that the frame (1) is arranged on/at a transport position device

9. Transport position securing device according to one or several of the claims 1 to 7, **characterized by** the fact
- that the frame (1) is arranged on a chassis with wheels (12).

10. Transport position securing device according to claim 9, **characterized by** the fact
- that a tow bar (13) is arranged at the frame (1).

11. Transport position securing device according to claim 10, **characterized by** the fact
- that the tow bar (13) is designed to be removable.

12. Transport position securing device according to one or several of the claims 2 to 11, **characterized by** the fact
- that both of the clamping rockers (5) have the same opening angle (α) or an angle different from each other.

## Revendications

1. Dispositif de sécurisation d'une couche de transport pour le transport antidérapant d'objets aux géométries de formes de construction complexes et/ou d'accessoires finement usinés pourvu d'un cadre (1), composé de deux parois latérales (2) placées en vis-à-vis et d'une ou plusieurs traverses transversales (3) disposées entre les parois latérales (2), **caractérisé par le fait**
- **que** des rainures d'encliquetage (4) sont disposées par paires dans les parois latérales (2) placées en vis-à vis, et
- **que** deux fléaux de serrage (5) sont placés dans le cadre (1) de manière à pouvoir basculer dans ces rainures d'encliquetage (4) disposées par paires, et
- **que** chacun des deux fléaux de serrage (5) présente deux plaques de support (6) disposées à distance entre les deux parois latérales (2) à l'intérieur du cadre (1), les plaques de support (6) possédant des tourillons (7) dirigés vers l'extérieur en direction des parois latérales (2), lesquels tourillons étant disposés de manière rotative dans les rainures d'encliquetage (4), et
- **que**, entre les plaques de support (6) à distance des tourillons (7), en état de fléau de serrage (5) non chargé par le transport de marchandises au dessus du tourillon (7), deux traverses de sécurisation de couche (9) placées parallèlement à l'axe central (8) des tourillons (7) sont disposées et que une ou plusieurs tiges de rappel (10) sont placées à l'opposé des traverses de sécurisation de couche (9), le centre de gravité de chaque fléau de serrage (5) en état de transport de marchandises non chargé étant toujours situé entre les traverses de sécurisation de couche (9) et sous l'axe central (8) des tourillons (7).

2. Dispositif de sécurisation d'une couche de transport selon l'exigence 1 **caractérisé par le fait**
- **que** les deux traverses de sécurisation de couche (9) forment dans le plan des plaques de support (6), et également dans celui des points de fixation (11) des plaques de support (6), vis-à-vis du tourillon (7), un angle d'ouverture (α) compris dans une plage allant de 60° à 120° en fonction de la conception du rebord d'installation de la marchandise tout comme selon l'angle entre le sol et la paroi latérale de la marchandise à transporter.

3. Dispositif de sécurisation d'une couche de transport selon l'exigence 2 **caractérisé par le fait**
- **que** l'angle d'ouverture (α) est de 85° dans le cadre d'une forme de construction privilégiée pour des marchandises pour lesquelles l'angle du rebord d'installation de la marchandise à transporter est d'environ 90°.

4. Dispositif de sécurisation d'une couche de transport selon une ou plusieurs des exigences 1 à 3 **caractérisé par le fait**
- **qu'**au moins l'un des deux fléaux de serrage (5) est conçu comme fléau de serrage (5) "non équilatéral" de telle manière que les lignes centrales des deux traverses de sécurisation de couche (9) disposées sur un fléau de serrage (5) parallèlement à l'axe central (8) des tourillons (7) soient à des distances différentes de l'axe central (8), de façon à ce que les points de fixation (11) des traverses de sécurisation de couche (9) forment un triangle non équilatéral/irrégulier avec le tourillon (7) sur la plaque de support (6).

5. Dispositif de sécurisation d'une couche de transport selon une ou plusieurs des exigences 1 à 4 **caractérisé par le fait**
- **qu'**au moins l'un des deux fléaux de serrage (5) est conçu comme fléau de serrage (5) "équilatéral" de telle manière que les lignes centrales des deux traverses de sécurisation de couche (9) disposées sur un fléau de serrage (5) parallèlement à l'axe central (8) des tourillons (7) soient à des distances égales de l'axe central (8), de façon à ce que les points de fixation (11) des traverses de sécurisation de couche (9) forment un triangle équilatéral avec le tourillon (7) sur la plaque de support (6).

6. Dispositif de sécurisation d'une couche de transport selon une ou plusieurs des exigences 1 à 5 **caractérisé par le fait**
- **que** la rainure d'encliquetage (4) placée de manière inclinée dans la paroi latérale (2) est disposée verticalement ou vis-à-vis de la verticale en direction la force de serrage à atteindre au travers du fléau de serrage (5) accroché dans cette rainure d'encliquetage (4) selon un angle d'inclinaison (β) se trouvant entre 0° et 60°.

7. Dispositif de sécurisation d'une couche de transport selon l'exigence 6 **caractérisé par le fait**
- **que**, dans chaque paroi latérale (2), sont disposées plusieurs rainures d'encliquetage (4) côte-à-côte, celles-ci étant cependant ordonnées de manière inclinée selon l'angle d'inclinaison (β) des deux côtés du "milieu" de paroi latérale (2) en direction opposée.

8. Dispositif de sécurisation d'une couche de transport selon une ou plusieurs des exigences 1 à 7 **caractérisé par le fait**
- **que** le cadre (1) est placé sur/contre un dispositif de transport.

9. Dispositif de sécurisation d'une couche de transport selon une ou plusieurs des exigences 1 à 7 **caractérisé par le fait**
- **que** le cadre (1) est placé sur un châssis équipé de roues (12).

10. Dispositif de sécurisation d'une couche de transport selon l'exigence 9 **caractérisé par le fait**
- **qu'**une barre de traction (13) est disposée sur le cadre (1).

11. Dispositif de sécurisation d'une couche de transport selon l'exigence 10 **caractérisé par le fait**
- **que** la barre de traction (13) est conçue de manière amovible.

12. Dispositif de sécurisation d'une couche de transport selon une ou plusieurs des exigences 2 à 11 **caractérisé par le fait**
- **que** les deux fléaux de serrage (5) présentent les mêmes ou des angles d'ouverture (α) différents l'un de l'autre.
